# EUROPEAN PATENT SPECIFICATION

(11) **EP 2 154 425 B1**
(45) Date of publication and mention of the grant of the patent: **05.06.2013**
(21) Application number: 09010161.9
(22) Date of filing: 06.08.2009
(51) Int. Cl.: F21V 14/08, F21W 101/10

(54) **Vehicle headlamp**
Fahrzeugscheinwerfer
Phare de véhicule

(30) Priority: 08.08.2008 JP 2008205565
(43) Date of publication of application: 17.02.2010
(73) Proprietor: Koito Manufacturing Co., Ltd., Tokyo 108-8711 (JP)
(72) Inventor: Mochizuki, Kiyotaka c/o Koito Manufacturing Co., Ltd.,, Shizuoka-shi Shizuoka (JP); Sugimoto, Atsushi c/o Koito Manufacturing Co., Ltd.,, Shizuoka-shi Shizuoka (JP); Ohshio, Hirohiko c/o Koito Manufacturing Co., Ltd.,, Shizuoka-shi Shizuoka (JP)
(74) Representative: HOFFMANN EITLE

(56) References cited:
- EP-A1- 0 896 187
- EP-A1- 1 286 106
- EP-A1- 1 596 127
- FR-A1- 2 813 829

## Description

### FIELD OF INVENTION

Apparatuses consistent with the present invention relate to a vehicle headlamp including a lamp unit which has a movable shade and is capable of being swiveled in right-and-left directions.

### DESCRIPTION OF RELATED ART

Related art vehicle headlamps have a lamp housing and a lamp unit disposed inside the lamp housing. The lamp housing has a front cover and a rear housing part. The lamp unit has a light source.

Some lamp units are configured as a projector-type lamp unit having a projection lens which projects light emitted from a light source and a reflector which reflects the light emitted from the light source toward the projection lens. Between the light source and the projection lens, a shade may be disposed to shield a part of the light reflected by the reflector. The shade may be configured to move inside the lamp unit.

For example, a shade may be rotated, using a motor, about an axis extending in a vehicle width direction (a right-and-left direction) to move between a light shielding position and a retracted position (see, e.g., JP 2003-100121 A).

EP 0 896 187 also disclose a healamp with a movable shade.

Some related art vehicle headlamps include a projector-type lamp unit having a movable shade like the one described above, and the projector-type lamp unit is configured to be swivelable, using a drive motor, in right-and-left directions so as to follow a direction in which a vehicle is traveling.

That is, in the related art vehicle headlamps described above, two motors are provided to individually move the shade and the lamp unit. Thus, it is disadvantageous in terms of manufacturing cost, weight, and a size of the headlamp.

### SUMMARY OF INVENTION

Illustrative aspects of the present invention provide a vehicle headlamp which addresses the disadvantages described above.

According to an illustrative aspect of the present invention, a vehicle headlamp is provided. The vehicle headlamp includes a lamp unit, a drive unit which swivels the lamp unit in right-and-left directions, and a shade moving part. The lamp unit includes a light source, a projection lens, a reflector which reflects light emitted from the light source toward the projection lens, and a movable shade which moves to a light shielding position at which the movable shade shields a part of the light reflected by the reflector to switch a light distribution pattern to be projected through the projections lens. The movable shade includes a contact portion. The shade moving part and the contact portion are configured and positioned such that, when the lamp unit is swiveled, the contact portion abuts the shade moving part to cause the movable shade to move to the light shielding position.

Other aspects and advantages of the present invention will be apparent from the following description, the drawings and the claims.

### BRIEF DESCRIPTION OF THE DRAWINGS

Fig. 1 is a vertical sectional view of a vehicle headlamp according to an exemplary embodiment of the present invention.

Fig. 2 is a perspective view of a lamp unit, a bracket and an actuator of the vehicle headlamp of Fig. 1.

Fig. 3 is a side view of a pattern forming shade.

Fig. 4 is a diagram illustrating a one-side high beam light distribution pattern.

Fig. 5 is a diagram illustrating a full high beam light distribution pattern.

Fig. 6 is a conceptual diagram illustrating swiveling ranges of the lamp unit.

Fig. 7 is a vertical sectional view of the lamp unit in which a movable shade is in a retracted position.

Fig. 8 is a schematic vertical sectional view of the lamp unit in which a movable shade is in a light shielding position.

Fig. 9 is a diagram illustrating how the movable shade shields light in the light shielding position to form a low beam light distribution pattern.

### DETAILED DESCRIPTION OF EXEMPLARY EMBODIMENTS OF INVENTION

Hereinafter, an exemplary embodiment of the present invention will be explained in detail with reference to the drawings. The following exemplary embodiment is an example only and does not limit the scope of the present invention as defined by the claims.

A vehicle headlamp 1 according to the exemplary embodiment is mounted on each of right and left sides of a front part of a vehicle body.

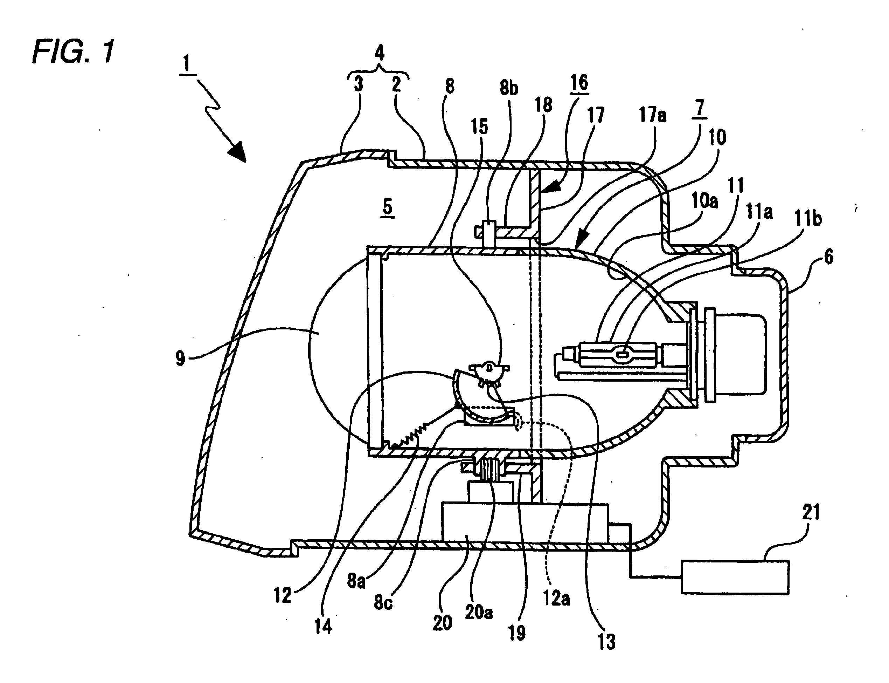

As shown in Fig. 1, the vehicle headlamp 1 includes a lamp housing 4. The lamp housing 4 includes a housing part 2 having a front opening, and a front cover 3 which covers the front opening of the housing part 2. An internal space of the lamp housing is formed as a lamp chamber 5.

An attaching hole is formed through a rear end portion of the housing part 2. A back cover 6 is attached to the attaching hole.

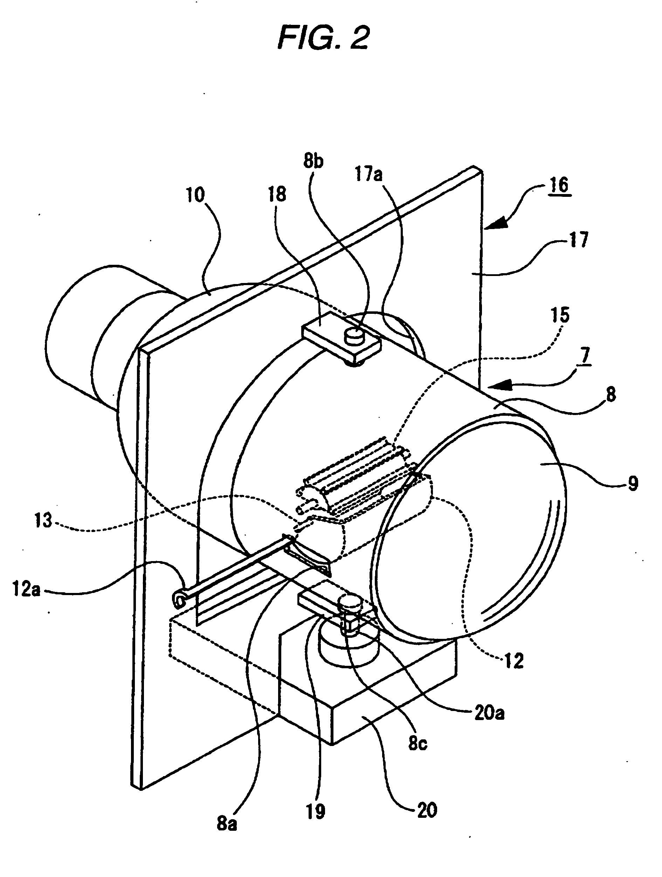

A lamp unit 7 is disposed in the lamp chamber 5. As shown in Figs. 1 and 2, the lamp unit 7 includes a lens holder 8, a projection lens 9 attached to a front end portion of the lens holder 8, a reflector 10 attached to a rear side of the lens holder 8, and a light source 11 attached to a rear end portion of the reflector 10.

The lamp unit 7 is supported by the housing part 2 via an optical axis adjusting mechanism which is not shown. By operating the optical axis adjusting mechanism, the lamp unit 7 is relatively moved in up-and-down directions and/or in right-and-left directions with respect to the housing part 2 so as to adjust an optical axis of light emitting from the light source 11 (an aiming adjustment or a leveling adjustment).

The lens holder 8 has a cylindrical shape which is hollow in a front-and-rear direction. A passage hole 8a is formed through right or left side of the lens holder 8 (right side in the example shown in the drawings) so as to penetrate through a wall of the lens holder 8. A pivot 8b is provided at an upper end portion of the lens holder 8 to upwardly protrude therefrom, and a coupling shaft 8c is provided at a lower end portion of the lens holder 8 to downwardly protrude therefrom.

The projection lens 9 has a convex front surface and a flat rear surface. The projection lens 9 inverts an image on a focal plane, which includes a rear focal point of the projection lens 9, and forwardly projects the inverted image.

An inner surface of the reflector 10 has a reflecting surface 10a. The reflecting surface 10a is formed as, for example, an ellipsoidal surface expect for a front portion thereof. The reflecting surface 10a is configured and positioned such that a first focal point coincides with a light emitting part 11b of the light source 11 and such that a second focal point coincides with the rear focal point of the projection lens 9.

The light source 11 is, for example, a discharge bulb having an outer tube 11a inside which the light emitting part 11b is disposed. Light emitted from the light emitting part 11b is directed forward or is reflected by the reflecting surface 10a of the reflector 10 so as to be converged on the focal plane of the projection lens 9, whereby the light is forwardly projected through the projection lens 9 as illumination light

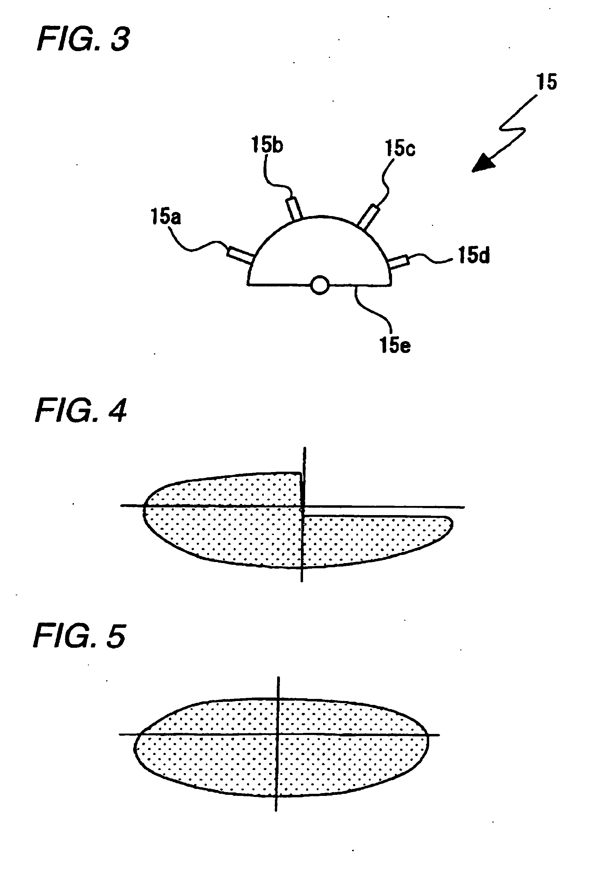

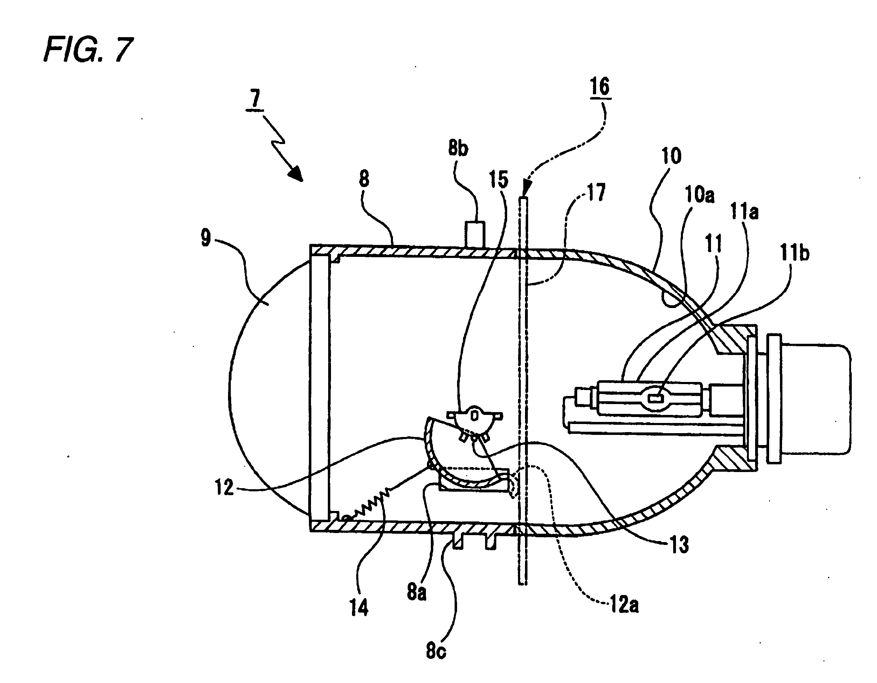

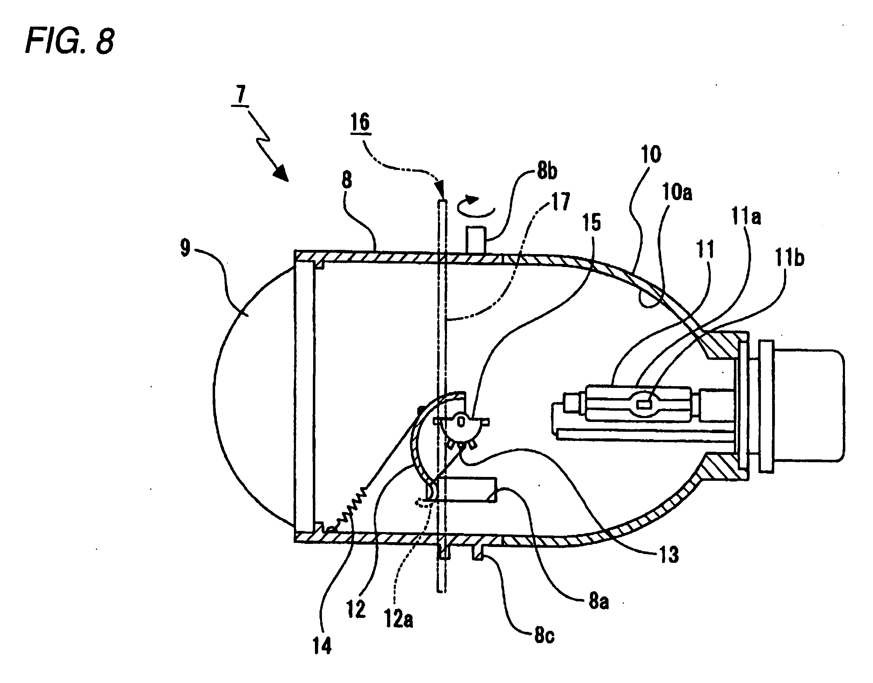

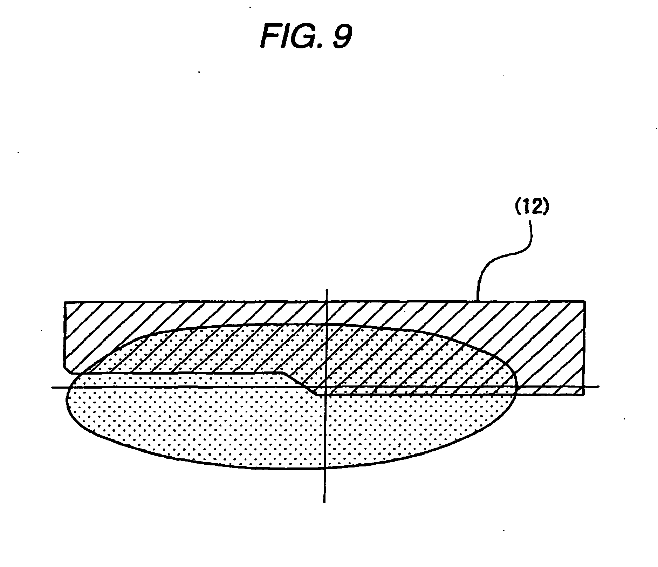

The lamp unit 7 further includes a movable shade 12 which is disposed between the projection lens 9 and the light source 11. The movable shade 12 is configured to relatively rotate on a support shaft 13, which serves as a fulcrum, with respect to the lens holder 8. The movable shade 12 moves between a light shielding position (see Fig. 8) at which the movable shade 12 shields a part of the light reflected by the reflector 10 to form a low beam light distribution pattern (see Fig. 9) and a retracted position (see Fig. 7) at which the movable shade 12 allows a formation of a one-side high beam light distribution pattern (see Fig. 4) or a full high beam light distribution pattern (see Fig. 5). The support shaft 13 is provided to extend in right-and-left directions, and is supported by the lens holder 8 at both end portions thereof.

The movable shade 12 has a contact portion 12a which extends sideways at a lower end portion thereof. The contact portion 12a is configured to protrude outward from the passage hole 8a of the lens holder 8.

A biasing means 14, e.g., a tension coil spring, is disposed between the movable shade 12 and the lower end portion of the lens holder 8. More specifically, the biasing means 14 couples the movable shade 12 and the lens holder 8 to bias the movable shade 12 in a direction in which an upper end portion of the movable shade 12 moves downward. When no force is being applied to the movable shade against the biasing force of the biasing means 14, the movable shade 12 is positioned and maintained in the retracted position (see Figs. 1 and 7) in which the upper end portion of the movable shade 12 is moved downward to allow a formation of the full high beam light distribution pattern.

The lamp unit 7 further includes a pattern forming shade 15 which is disposed directly behind the movable shade 12. The pattern forming shade 15 is configured and arranged to extend in a vehicle width direction and to rotate about an axis extending in the vehicle width direction.

As shown in Fig. 3, the pattern forming shade 15 has a semi-cylindrical shape, and has, for example, a first pattern forming portion 15a, a second pattern forming portion 15b, a third pattern forming portion 15c, and a fourth pattern forming portion 15d which are provided on an outer peripheral surface of the pattern forming shade 15 at intervals in a circumferential direction. The pattern forming portions 15a to 15d are configured to partially shield the light reflected by the reflector 10 in different manners. A flat surface portion of the pattern forming shade 15 serves as a fifth pattern forming portion 15e which forms the full high beam light distribution pattern. In accordance with a driving condition of a vehicle, light distribution patterns can be switched by rotating the pattern forming shade 15.

According to the pattern forming shade 15 of this exemplary embodiment, five light distribution patterns can be formed. For example, in addition to the high beam light distribution pattern, the four remaining light distribution patterns may be a low beam light distribution pattern for left hand traffic, a low beam light distribution pattern for right hand traffic, a motorway light distribution pattern, and a one-side high beam light distribution pattern (see Fig. 4).

The low beam light distribution patterns are used, for example, when driving on a normal road, and the motorway light distribution pattern is used, for example, when driving at a high speed on a motorway. The one-side high beam light distribution pattern is used, for example, to irradiate a distant region only on a self lane on which the vehicle is traveling (in left hand traffic), and the full high beam light distribution pattern is used to irradiate a wide range of distant region including the self lane and an oncoming lane. Switching between the respective light distribution patterns is performed, for example, by operating a pattern selecting switch which may be disposed within a reach of a driver of the vehicle.

Fig. 4 is a diagram illustrating the one-side high beam light distribution pattern, and Fig. 5 is a diagram illustrating the full high beam light distribution pattern.

As shown in Figs. 1 and 2, the vehicle headlamp 1 further includes a bracket 16 disposed inside the lamp chamber 5. The lamp unit 7 is supported on a bracket 16 so as to be swivelable in a horizontal direction (the right-and-left directions). The swiveling motion of the lamp unit 7 may be linked to a steering operation of the driver so as to follow the traveling direction of the vehicle.

As is shown in Figs. 1 and 2, the bracket 16 has a flat plate-like base 17 facing the front-and-rear directions, and support protrusions 18, 19 forwardly protruding from upper and lower portions of the base 17, respectively.

An arrangement hole 17a is formed through the base 17 so as to have a size which is larger than an external shape of the lamp unit 7, and the lamp unit 7 is inserted into the arrangement hole 17a. The base 17 is attached to the housing part 2.

The pivot 8b provided on the lens holder 8 is rotatably supported at a distal end portion of the upper support protrusion 18.

The coupling shaft 8c provided on the lens holder 8 is rotatably supported at a distal end portion of the lower support protrusion 19.

The vehicle headlamp 1 further includes an actuator 20 which is disposed below the lamp unit 7. The actuator 20 serves as a drive unit for swiveling the lamp unit 7 in the horizontal direction. The actuator 20 has an upwardly extended drive shaft 20a to which the coupling shaft 8c of the lamp unit 7 is coupled. Thus, when the drive shaft 20a is rotated by virtue of a driving force of the actuator 20, the driving force of the actuator 20 is transmitted to the lamp unit 7 via the coupling shaft 8c, whereby the lamp unit 7 is swiveled in the right-and-left directions on the pivot 8b and the coupling shaft 8c, both of which serve as fulcrums.

The actuator 20 is controlled by a drive control unit (an electronic control unit) 21. The drive control unit 21 controls the actuator 20 in accordance with the driver's steering operation to swivel the lamp unit 7.

During the time at which the vehicle headlamp 1 is on, the swivel operation of the lamp unit 7 is performed in accordance with the traveling direction of the vehicle which is determined by the steering operation by the driver, whereby the lamp unit 7 is rotated in the right-and-left directions. The swivel operation of the lamp unit 7 depending on the steering operation is implemented within a range which is narrower than a maximum swivelable range of the lamp unit 7.

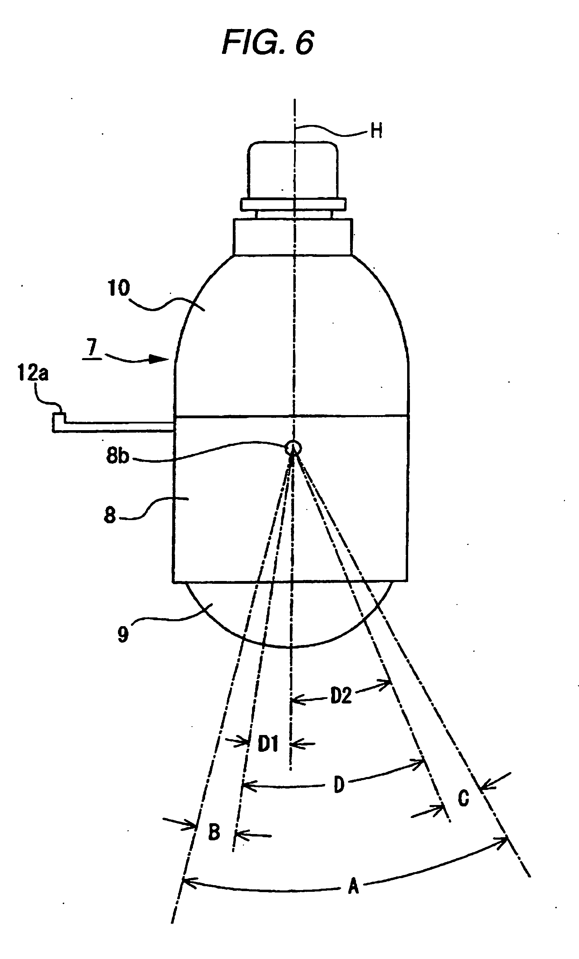

More specifically, as is shown in Fig. 6, the swivel operation of the lamp unit 7 depending on the steering operation is implemented within a swiveling range D which is narrower than the maximum swivelable range A. The swiveling range D includes a reference line H which passes through a swiveling center 8b of the lamp unit 7 and extends in a front-and-rear direction of the headlamp 1 (i.e., a front-and-rear direction of the vehicle on which the headlamp 1 is mounted) which is perpendicular to the vehicle width direction. The swiveling range D is divided into an inner swiveling range D1 and an outer swiveling range D2, with the reference line H being a border line between the inner swiveling range D1 and the outer swiveling range D2. The maximum swivelable range A is divided into an inner maximum swivelable range D1+B and an outer maximum swivelable range D2+C. That is, the swiveling range D is narrower than the maximum swivelable range A by an angle B+C.

Further, the inner swiveling range D1 is narrower than the outer swiveling range D2, and the inner maximum swivelable range D1+B is also narrower than the outer maximum swivelable range D2+C. Here, in connection with the swiveling ranges, it is to be noted that the terms "inner" and "outer" are used with reference to the vehicle width direction extending from a center of the vehicle. Thus, if the headlamp 1 is mounted on the left side of the vehicle, the inner swiveling range D1 and the outer swiveling range D2 will be a rightward swiveling range D1 and a leftward swiveling range D2, respectively, as shown in Fig. 6. On the other hand, if the headlamp 1 is mounted on the right side of the vehicle, the inner swiveling range D1 and the outer swiveling range D2 will be a leftward swiveling range D1 and a rightward swiveling range D2, respectively

As described above, while driving the vehicle, the light distribution patterns are switchable by operating the pattern selecting switch to rotate the pattern forming shade 15. However, in the event of an operation failure due to a disconnection for example, there may be a situation in which the pattern forming shade 15 cannot be rotated by operating the pattern selecting switch so that the light distribution patterns cannot be switched. If the one-side high beam light distribution pattern (see Fig. 4) or the full high beam light distribution pattern (see Fig. 5) is being selected in such an event, the following operation is implemented in order to avoid dazzling an oncoming vehicle or the like.

When a detection unit (not shown) detects, during an operation failure of the pattern forming shade 15, that the one-side high beam light distribution pattern or the full high beam light distribution pattern is being selected, the detection unit outputs a light distribution switching signal to the drive control unit 21 to drive the actuator 20 such that the lamp unit 7 is swiveled to a swiveling end. Fig. 7 shows a case in which the full high beam light distribution pattern is being selected.

The swiveling end described above may be an inner end or an outer end of the maximum swivelable range A. According to this exemplary embodiment, the lamp unit 7 is swiveled over the range B to the end of the inner maximum swivelable range D1+B which is narrower than the outer maximum swivelable range D2+C (See Fig. 6).

When the lamp unit 7 is swiveled to exceed the range D toward the swiveling end, the contact portion 12a of the movable shade 12 is brought into abutment with the base 17 of the bracket 16, whereby the movable shade 12 is rotated against the biasing force of the biasing means 14 from the retracted position and reaches the light shielding position (see Fig. 8) when the lamp unit 7 reaches the swiveling end. When the movable shade 12 is rotated from the retracted position to the light shielding position, the upper end portion of the movable shade 12 is moved upward to shield a part of light that were forming a portion of the high beam light distribution pattern, whereby a low beam light distribution pattern is formed as shown in Fig. 9.

Because the base 17 of the bracket 16 rotates the movable shade 12 when the contact portion 12a of the movable shade 12 is brought into abutment therewith as described above, the base 17 functions as a shade moving part.

While an example of switching the light distribution patterns by swiveling the lamp unit 7 has been described in case of an operation failure of the pattern forming shade 15, also in a configuration in which the pattern forming shade 15 is not provided, the light distribution patterns may be switched by rotating the movable shade 12 through the swiveling motion of the lamp unit 7 so as to change the amount and a range of light to be shielded in accordance with a position of the movable shade 12.

As described above, in the vehicle headlamp 1, the drive control unit 21 controls the actuator 20 in response to the light distribution switching signal to switch the light distribution patterns by swiveling the lamp unit 7 in the right-and-left directions.

Because the light distribution patterns are switched by rotating the movable shade 12 using the driving force of the actuator 20 which swivels the lamp unit 7, the swivel operation of the lamp unit 7 and the rotational operation of the movable shade 12 can be implemented by the single actuator 20. Therefore, manufacturing cost, weight and a size of the vehicle headlamp 1 can be reduced.

Further, because the contact portion 12a of the movable shade 12 is brought into abutment with the base 17 of the bracket 16 when the lamp unit 7 is swiveled outside the range D in which the swivel operation depending of the steering operation is implemented, the movable shade 12 is not rotated when the lamp unit 7 is within the swiveling range D. Thus, it is possible to prevent an unnecessary switching of the light distribution patterns during the swivel operation of the lamp unit 7 depending of the steering operation.

Further, it is advantageous to cause the contact portion 12a of the movable shade 12 to abut the base 17 by swiveling the lamp unit 7 to the swiveling end of the inner maximum swivelable range D1+B which is narrower than the outer maximum swivelable range D2+C because the light distribution patterns can be switched by the movable shade 12 quickly and with a smaller amount of power consumed.

Furthermore, because the movable shade 12 is configured to rotate on the support shaft 13 extending in the right-and-left directions as the fulcrum, the switching of the light distribution patterns by the movable shade 12 can be implemented with a simple configuration.

In addition, when the movable shade 12 is in the light shielding position, the movable shade 12 forms the same light distribution pattern irrespective of a position of the pattern forming shade 15. Thus, even when there is an operation failure of the pattern forming shade 15, the switching of the light distribution patterns can still be implemented by the movable shade 12.

Although five light distribution patterns are described above so as to be adaptable for various driving conditions, the number of light distribution patterns is not limited to five and is optional.

While the present invention has been shown and described with reference to certain exemplary embodiments thereof, it will be understood by those skilled in the art that various changes in form and details may be made therein without departing from the scope of the present invention as defined by the appended claims.

## Claims

1. A vehicle headlamp (1) comprising:
a lamp unit (7) comprising a light source (11), a projection lens (9), a reflector (10) which reflects light emitted from the light source (7) toward the projection lens (9), and a movable shade (12) which moves to a light shielding position at which the movable shade (12) shields a part of the light reflected by the reflector to switch a light distribution pattern to be projected through the projections lens (9),
a drive unit (20) which swivels the lamp unit (7) in right-and-left directions; and
a shade moving part (17),
wherein the movable shade (12) comprises a contact portion (12a),
**characterized in that** the shade moving part (17) and the contact portion (12a) are configured and positioned such that, when the lamp unit (7) is swiveled, the contact portion (12a) abuts the shade moving part (17) to cause the movable shade (12) to move to the light shielding position.

2. The vehicle headlamp (1) according to claim 1, wherein the movable shade (12) reaches the light shielding position when the lamp unit (7) reaches a swiveling end of a maximum swivelable range (A) of the lamp unit (7).

3. The vehicle headlamp (1) according to claim 2, wherein, when the maximum swivelable range (A) is divided by a reference line (H), which passes through a swiveling center (8b) of the lamp unit (7) and extends in a front-and-rear direction of the headlamp (1), into a rightward maximum swivelable range (D1+B) and a leftward maximum swivelable range (D2+C), and
the contact portion (12a) abuts the shade moving part (17) when the lamp unit (7) is in a narrower one of the rightward maximum swivelable range (D1+B) and the leftward maximum swivelable range (D2+C).

4. The vehicle headlamp (1) according to claim 2 or 3, further comprising a drive control unit (21) which controls the drive unit (20) to swivel the lamp unit (7),
wherein, when the drive control unit (21) controls the drive unit (7) in accordance with a steering operation of a vehicle on which the headlamp (1) is mounted, the lamp unit (7) is swiveled within a range (D) narrower than the maximum swivelable range (A).

5. The vehicle headlamp (1) according to any one of the preceding claims, wherein the movable shade (12) is configured to rotate on a support shaft (13) extending in the right-and-left directions as a fulcrum.

6. The vehicle headlamp (1) according to any one of the preceding claims, further comprising a pattern forming shade (15) which moves to partially shield the light reflected by the reflector (10),
wherein, when the movable shade (12) is in the light shielding position, the movable shade (12) forms the same light distribution pattern irrespective of a position of the pattern forming shade (15).

7. The vehicle headlamp (1) according to any one of the preceding claims, wherein the lamp unit (7) further comprises a biasing means (14) which biases the movable shade (12) toward a retracted position at which the movable shade (12) allows a formation of a high beam light distribution pattern.

8. The vehicle headlamp (1) according to any one of the preceding claims, wherein the lamp unit (7) further comprises a lens holder (8) to which the projection lens (9) and the reflector (10) are attached and which houses the moveable shade (12), and
the lens holder (8) comprises a passage hole (8a) through which the contact portion (12a) of the moveable shade (12) passes so as to be contactable with the shade moving part (17).

## Patentansprüche

1. Fahrzeugscheinwerfer (1) mit:
einer Lampeneinheit (7) mit: einer Lichtquelle (11), einer Projektionslinse (9), einem Reflektor (10), der Licht, das von der Lichtquelle (7) emittiert wird, zu der Projektionslinse (9) reflektiert, und einem beweglichen Schirm (12), der sich zu einer Lichtabschirmposition, an welcher der bewegliche Schirm (12) einen Teil des Lichts, das durch den Reflektor reflektiert wird, abschirmt, bewegt, um ein Lichtverteilungsmuster, das durch die Projektionslinse (9) projiziert werden soll, zu wechseln,
einer Antriebseinheit (20), welche die Lampeneinheit (7) in rechte und linke Richtungen schwenkt, und
einem Schirmbewegungsteil (17),
wobei der bewegliche Schirm (12) einen Kontaktabschnitt (12a) aufweist,
**dadurch gekennzeichnet, dass** das Schirmbewegungsteil (17) und der Kontaktabschnitt (12a) so ausgestaltet und positioniert sind, dass sich, wenn die Lampeneinheit (7) verschwenkt ist, der Kontaktabschnitt (12a) im Anschlag mit dem Schirmbewegungsteil (17) befindet, um zu bewirken, dass sich der bewegliche Schirm (12) zu der Lichtabschirmposition bewegt.

2. Fahrzeugscheinwerfer (1) gemäß Anspruch 1, bei dem der bewegliche Schirm (12) die Lichtabschirmposition erreicht, wenn die Lampeneinheit (7) ein Schwenkende eines maximalen Schwenkbereichs (A) der Lampeneinheit (7) erreicht hat.

3. Fahrzeugscheinwerfer (1) gemäß Anspruch 2, bei dem, wenn der maximale Schwenkbereich (A) durch eine Referenzlinie (H), die ein Schwenkzentrum (8b) der Lampeneinheit (7) durchläuft und sich in eine Vor-/Zurückrichtung des Fahrzeugscheinwerfers (1) erstreckt, in einen rechten maximalen Schwenkbereich (D1+B) und einen linken maximalen Schwenkbereich (D2+C), geteilt ist, und
sich der Kontaktabschnitt (12a) mit dem Schirmbewegungsteil (17) im Anschlag befindet, wenn sich die Lampeneinheit (7) in einem Kleineren aus dem rechten maximalen Schwenkbereich (D1+B) und dem linken maximalen Schwenkbereich (D2+C) befindet.

4. Fahrzeugscheinwerfer (1) gemäß Anspruch 2 oder 3 ferner mit einer Antriebssteuerungseinheit (21), welche die Antriebseinheit (20) steuert um die Lampeneinheit (7) zu schwenken,
wobei, wenn die Antriebssteuerungseinheit (21) die Betriebseinheit (7) in Übereinstimmung mit einer Lenkoperation eines Fahrzeugs, an dem der Fahrzeugscheinwerfer (1) angebracht ist, steuert, die Lampeneinheit (7) innerhalb eines Bereichs (D), der enger als der maximale Schwenkbereich (A) ist, geschwenkt wird.

5. Fahrzeugscheinwerfer (1) gemäß einem der vorangegangenen Ansprüche, bei dem der bewegliche Schirm (12) ausgestaltet ist, um sich an einer Halteachse (13) als Drehpunkt zu drehen, die sich in der Rechts-/Linksrichtung erstreckt.

6. Fahrzeugscheinwerfer (1) gemäß einem der vorangegangenen Ansprüche, ferner mit einem Musterbildungsschirm (15) der sich bewegt, um das Licht, das durch den Reflektor (10) reflektiert wird, teilweise abzuschirmen,
wobei, wenn der bewegliche Schirm (12) in der Lichtabschirmposition ist, der bewegliche Schirm (12) das gleiche Lichtverteilungsmuster ungeachtet einer Position des Musterbildungsschirms (15), ausbildet.

7. Fahrzeugscheinwerfer (1) gemäß einem der vorangegangenen Ansprüche, bei dem die Lampeneinheit (7) ferner eine Beaufschlagungseinrichtung (14) aufweist, die den beweglichen Schirm (12) in einer zurückgezogenen Position beaufschlagt, an welcher der bewegliche Schirm (12) die Ausbildung eines Fernlichtverteilungsmusters ermöglicht.

8. Fahrzeugscheinwerfer (1) gemäß einem der vorangegangenen Ansprüche, bei dem die Lampeneinheit (7) ferner einen Linsenhalter (8) aufweist, an dem die Projektionslinse (9) und der Reflektor (10) befestigt sind und welcher den beweglichen Schirm (12) aufnimmt, und wobei
der Linsenhalter (8) eine Durchtrittsöffnung (8a) aufweist, durch die der Kontaktabschnitt (12a) des beweglichen Schirms (12) derart hindurchtritt, dass er mit dem Schirmbewegungsteil (17) kontaktierbar ist.

## Revendications

1. Phare de véhicule (1) comprenant :
une unité de lampe (7) comprenant une source de lumière (11), une lentille de projection (9), un réflecteur (10) qui réfléchit la lumière émise par la source de lumière (7) vers la lentille de projection (9) et un cache mobile (12) qui se déplace vers une position d'occultation de la lumière au niveau de laquelle le cache mobile (12) occulte une partie de la lumière réfléchie par le réflecteur pour commuter un modèle de distribution de la lumière devant être projeté à travers la lentille de projection (9),
une unité d'entraînement (20) qui fait pivoter l'unité de lampe (7) dans des directions droite et gauche ; et
une partie de déplacement de cache (17),
dans lequel le cache mobile (12) comprend une partie de contact (12a),
**caractérisé en ce que** la partie de déplacement de cache (17) et la partie de contact (12a) sont configurées et positionnées de telle sorte que, lorsque l'unité de lampe (7) est pivotée, la partie de contact (12a) vient en butée contre la partie de déplacement de cache (17) pour déplacer le cache mobile (12) vers la position d'occultation de la lumière.

2. Phare de véhicule (1) selon la revendication 1, dans lequel le cache mobile (12) atteint la position d'occultation de la lumière lorsque l'unité de lampe (7) atteint une fin de pivotement d'une plage de pivotement maximale (A) de l'unité de lampe (7).

3. Phare de véhicule (1) selon la revendication 2, dans lequel, lorsque la plage de pivotement maximale (A) est divisée par une ligne de référence (H), qui traverse un centre de pivotement (8b) de l'unité de lampe (7) et s'étend dans une direction avant et arrière du phare (1), dans une plage de pivotement maximale vers la droite (D1 + B) et une plage de pivotement maximale vers la gauche (D2 + C), et
la partie de contact (12a) vient en butée contre la partie de déplacement de cache (17) lorsque l'unité de lampe (7) est dans une plage plus étroite parmi la plage de pivotement maximale vers la droite (D1 + B) et la plage de pivotement maximale vers la gauche (D2 + C).

4. Phare de véhicule (1) selon la revendication 2 ou 3, comprenant en outre une unité de commande d'entraînement (21) qui commande l'unité d'entraînement (20) pour faire pivoter l'unité de lampe (7),
dans lequel, lorsque l'unité de commande d'entraînement (21) commande l'unité d'entraînement (7) conformément à une manoeuvre de direction d'un véhicule sur lequel est monté le phare (1), l'unité de lampe (7) pivote dans une plage (D) plus étroite que la plage de pivotement maximale (A).

5. Phare de véhicule (1) selon l'une quelconque des revendications précédentes, dans lequel le cache mobile (12) est configuré pour tourner sur un arbre support (13) s'étendant dans les directions droite et gauche comme un point d'appui.

6. Phare de véhicule (1) selon l'une quelconque des revendications précédentes, comprenant en outre un cache formant modèle (15) qui se déplace pour occulter partiellement la lumière réfléchie par le réflecteur (10),
dans lequel, lorsque le cache mobile (12) est dans la position d'occultation de la lumière, le cache mobile (12) forme le même modèle de distribution de la lumière indépendamment d'une position du cache formant modèle (15).

7. Phare de véhicule (1) selon l'une quelconque des revendications précédentes, dans lequel l'unité de lampe (7) comprend en outre des moyens de sollicitation (14) qui amènent le cache mobile (12) vers une position rétractée au niveau de laquelle le cache mobile (12) permet une formation d'un modèle de distribution de la lumière de faisceau de route.

8. Phare de véhicule (1) selon l'une quelconque des revendications précédentes, dans lequel l'unité de lampe (7) comprend en outre un support de lentille (8) auquel sont attachés la lentille de projection (9) et le réflecteur (10) et qui loge le cache mobile (12), et
le support de lentille (8) comprend un orifice de passage (8a) à travers lequel passe la partie de contact (12a) du cache mobile (12) de sorte à pouvoir être mise en contact avec la partie de déplacement de cache (17).
